# EUROPEAN PATENT APPLICATION

(11) **EP 4 776 053 A1**
(43) Date of publication of application: **15.07.2026**
(21) Application number: 24861916.5
(22) Date of filing: 30.08.2024
(51) Int. Cl.: G02B 27/01

(54) **PANCAKE LENS, OPTICAL IMAGING SYSTEM, AND HEAD-MOUNTED DISPLAY DEVICE**

(30) Priority: 04.09.2023 CN 202311133538
(71) Applicant: Beijing Zitiao Network Technology Co., Ltd., Beijing 100190 (CN); Lemon Inc., Grand Cayman, KY1-1205 (KY)
(72) Inventor: ZHU, Shaopeng, Beijing 100028 (CN); ZHANG, Ziyang, Los Angeles California 90066 (US); ZHANG, Zhao, Beijing 100028 (CN); LI, Xin, Beijing 100028 (CN); LI, Xiaokai, Beijing 100028 (CN)
(74) Representative: Grünecker Patent- und Rechtsanwälte PartG mbB
(86) International application number: PCT/CN2024/116138
(87) International publication number: WO 2025/051072

(57) **Abstract**

The disclosure provides a folded optical path lens, an optical imaging system, and a head-mounted display device. The folded optical path lens includes: a first lens, which has a first surface and a second surface arranged opposite each other, with the first surface being a convex surface; a beam splitter film, which is disposed on the first surface. The difference between the reflectance and transmittance of the beam splitter film is less than or equal to 20%. The beam-splitting film comprises a plurality of optical coating layers stacked together, wherein the plurality of optical coating layers comprise at least one non-metallic transparent coating and at least one metallic layer. By including the metallic layer, the consistency of the transmittance of the s-polarized light and p-polarized light components of obliquely incident ray through the folded optical path lens is improved. This effectively enhances the ellipticity of the folded optical path lens, making it closer to 1, thereby significantly reducing ghosting and stray light in the folded optical path lens.

## Description

This application claims the priority of a Chinese patent application submitted on September 4, 2023, with application No. 202311133538.5 and entitled " FOLDED OPTICAL PATH LENS, OPTICAL IMAGING SYSTEM AND HEAD-MOUNTED DISPLAY DEVICE". All contents of this application are incorporated in the present disclosure by reference.

### FIELD

The present disclosure relates to the field of optical technology, and in particular, to a folded optical path lens, an optical imaging system, and a head-mounted display device.

### BACKGROUND

In virtual reality (VR) devices, near-eye display devices magnify the image from the display screen through lenses, providing users with an immersive experience. Currently, the mainstream lens technology has evolved from a Fresnel lens to an ultra-short-focus folded optical path (Pancake) lens. The lens folds the optical path to significantly reduce the distance required between the near-eye display device and the human eye, thus making the VR device lighter and thinner.

In the Pancake lens, the key to fold optical path is the mutual conversion between circularly polarized light and linearly polarized light. The ellipticity of the circularly polarized light within the folded optical path of the Pancake lens is an important physical quantity determining the optical performance of the Pancake lens. When the ellipticity is 1, it represents that the polarized light is circularly polarized light; when the ellipticity is 0, it represents that the polarized light is linearly polarized light, and when the ellipticity is between 0 and 1, it represents that the polarized light is elliptically polarized light, with values closer to 1 indicating closer proximity to circularly polarized light. The principle of the Pancake lens requires that the ellipticity of the circularly polarized light within the folded optical path be as close to 1 as possible. If the ellipticity is low, part of the light will not follow the designed folded optical path, resulting in stray light or ghosting, which affects the imaging experience.

### SUMMARY

The present disclosure aims to solve at least one of the technical problems existing in the prior art. For this purpose, one purpose of the present disclosure is to provide a folded optical path lens, which has a high ellipticity and can effectively reduce the stray light or ghosting of the folded optical path lens.

In a first aspect, the present disclosure provides a folded optical path lens. According to an embodiment of the present disclosure, the folded optical path lens comprises: a first lens, the first lens having a first surface and a second surface disposed oppositely, the first surface being a convex surface; and a beam-splitting film, the beam-splitting film being disposed on the first surface, wherein a difference between a reflectance value and a transmittance value of the beam-splitting film is less than or equal to 20%, and the beam-splitting film comprises a plurality of optical coating layers stacked together, wherein the plurality of optical coating layers comprise at least one non-metallic transparent coating and at least one metallic layer. Thus, through the arrangement of the metallic layer, the consistency of the transmittance of the s-polarized and p-polarized light components for obliquely incident ray can be improved in this folded optical path lens, thereby effectively enhancing the ellipticity of the folded optical path lens, making its ellipticity closer to 1. This, in turn, can effectively reduce ghosting and stray light in the folded optical path lens.

According to embodiments of the present disclosure, the folded optical path lens further comprises a quarter-wave plate, the quarter-wave plate being disposed on a side of the first lens away from the convex surface; and a reflective polarizing film, the reflective polarizing film being disposed on a side of the quarter-wave plate away from the first lens.

According to embodiments of the present disclosure, when a ray is incident on the folded optical path lens at an angle less than or equal to 40°, a difference between transmittance values of s-polarized light and p-polarized light of the incident ray of the folded optical path lens is less than or equal to 20%, and a difference between reflectance values of the s-polarized light and the p-polarized light of the incident ray of the folded optical path lens is less than or equal to 20%.

According to embodiments of the present disclosure, the difference between the transmittance values of the s-polarized light and the p-polarized light of the incident ray of the folded optical path lens is less than or equal to 10%, and the difference between the reflectance values of the s-polarized light and the p-polarized light of the incident ray of the folded optical path lens is less than or equal to 10%.

According to embodiments of the present disclosure, when a ray is incident on the folded optical path lens at an angle less than or equal to 50°, a difference between transmittance values of s-polarized light and p-polarized light of the incident ray of the folded optical path lens is less than or equal to 20%, and a difference between reflectance values of the s-polarized light and the p-polarized light of the incident ray of the folded optical path lens is less than or equal to 20%.

According to embodiments of the present disclosure, a material of the metallic layer comprises at least one of silver, aluminum, chromium, titanium, platinum, silver-gold alloy, silver-indium alloy, and indium-tin alloy; a material of the non-metallic transparent coating comprises at least one of titanium dioxide, silicon dioxide, niobium pentoxide, aluminum oxide, tantalum dioxide, hafnium dioxide, magnesium fluoride, zinc sulfide, zinc selenide, zirconium dioxide, lanthanum oxide, praseodymium oxide, and cerium oxide.

According to embodiments of the present disclosure, a thickness of the metallic layer is 1~50 nanometers, and a thickness of the non-metallic transparent coating is 1~250 nanometers.

According to embodiments of the present disclosure, an outermost optical coating layer of the beam-splitting film is the non-metallic transparent coating.

According to embodiments of the present disclosure, an absorption rate of the beam-splitting film for visible light is less than or equal to 25%.

According to embodiments of the present disclosure, the folded optical path lens further comprises a second lens, the second lens having a third surface and a fourth surface, the third surface being disposed close to the second surface, the quarter-wave plate being disposed between the first lens and the second lens, and the reflective polarizing film being disposed on a side of the second lens away from the first lens.

According to embodiments of the present disclosure, the folded optical path lens further comprises a third lens, the third lens being disposed on a side of the first lens close to the second surface, the quarter-wave plate being disposed on a side of the first lens close to the third lens, and the reflective polarizing film being disposed on a side of the quarter-wave plate close to the third lens; a fourth lens, the fourth lens being disposed on a side of the beam-splitting film away from the first surface of the first lens; an anti-reflection coating, the anti-reflection coating being disposed on a surface of the fourth lens away from the first lens.

In another aspect of the present disclosure, the present disclosure provides an optical imaging system. According to embodiments of the present disclosure, the optical imaging system comprises a display screen and a folded optical path lens as mentioned above, the folded optical path lens being located on a light-emitting side of the display screen, and a ray emitted by the display screen forming an image after passing through the folded optical path lens. Thus, the ghosting and stray light in this optical imaging system are relatively weak, which helps improve the imaging quality of the optical imaging system. Those skilled in the art can understand that this optical imaging system possesses all the features and advantages of the previously described folded optical path lens, and further details are not elaborated here.

According to embodiments of the present disclosure, the display screen is a micro OLED display screen.

In yet another aspect of the present disclosure, the present disclosure provides a head-mounted display device. According to embodiments of the present disclosure, the head-mounted display device comprises the optical imaging system as mentioned above. Thus, the imaging quality of this head-mounted display device is enhanced.

### BRIEF DESCRIPTION OF THE DRAWINGS

The above and/or additional aspects and advantages of the present disclosure will become apparent and easy to understand from the description of embodiments in conjunction with the following drawings, wherein:
FIG. 1 is a schematic structural diagram of a folded optical path lens in one embodiment of the present disclosure;
FIG. 2 is a ray path diagram in the folded optical path lens;
FIG. 3 is a schematic structural diagram of a folded optical path lens in another embodiment of the present disclosure;
FIG. 4 is a schematic structural diagram of a folded optical path lens in yet another embodiment of the present disclosure;
FIG. 5 is a schematic structural diagram of a folded optical path lens in embodiment 1 of the present disclosure;
FIG. 6 shows the reflectance and transmittance curves of light incident on the folded optical path lens in embodiment 1 of the present disclosure at incident angles of 0° and 40°, respectively;
FIG. 7 is a schematic structural diagram of a folded optical path lens in a comparative example 1 of the present disclosure;
FIG. 8 shows the reflectance and transmittance curves of light incident on the folded optical path lens in embodiment 1 at incident angles of 0° and 40°, respectively in a comparative example 1 of the present disclosure;
FIG. 9 is a schematic structural diagram of the folded optical path lens in embodiment 2 of the present disclosure;
FIG. 10 shows the reflectance and transmittance curves of light incident on the folded optical path lens in embodiment 1 at incident angles of 0° and 40°, respectively, in embodiment 2 of the present disclosure;
FIG. 11 is a schematic structural diagram of the folded optical path lens in comparative example 2 of the present disclosure;
FIG. 12 shows the reflectance and transmittance curves of light incident on the folded optical path lens in Embodiment 1 of the present disclosure at incident angles of 0° and 40°, respectively, in comparative example 2 of the present disclosure; and
FIG. 13 is a schematic diagram showing the positional relationship between the folded optical path lens and the display screen.

### DETAILED DESCRIPTION

The scheme of the present disclosure will be explained below in conjunction with embodiments. It will be appreciated by those skilled in the art that the following embodiments are only used to illustrate the present disclosure and should not be considered as limiting the scope of the present disclosure. Where specific techniques or conditions are not indicated in embodiments, the techniques or conditions described in the literature in this area or the product specifications are used. The reagents or instruments used are not indicated by the manufacturer and are all conventional products that can be obtained commercially.

Referring to specific embodiments, the invention will be described as follows. It should be noted that these embodiments are merely descriptive and do not limit the invention in any way.

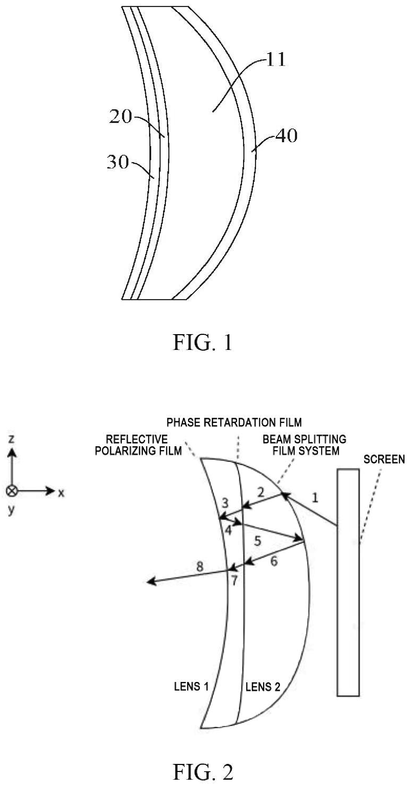

In one aspect of the present disclosure, a folded optical path lens is provided. According to embodiments of the invention, with reference to FIG. 1, the folded optical path lens includes: a first lens 11, which has a first surface and a second surface disposed oppositely, wherein the first surface is a convex surface; a beam-splitting film 40, which is disposed on the first surface of the first lens 11, i.e., on the convex surface. The beam-splitting film comprises a plurality of stacked optical coating layers stacked together which includes at least one non-metallic transparent coating and at least one metallic layer. Thus, by setting the metallic layer, the consistency of the transmittance of s-polarized light and p-polarized light components of the oblique incident ray can be improved (i.e., the difference in transmittance between s-polarized light and p-polarized light components is minimized), thereby effectively improving the ellipticity of the folded optical path lens, making it closer to 1, and consequently effectively reducing ghosting and stray light in the folded optical path lens.

According to Brewster's law, the equivalent refractive index of a dielectric material for s-polarized light and p-polarized light is different: np = n/cosθ, ns = ncosθ, where np and ns are the equivalent refractive indices of p-polarized light and s-polarized light at the interface of the medium with a refractive index of n, and θ is the angle of incidence. This is the reason for the inconsistency in the reflectance and transmittance of s-polarized and p-polarized components when a ray is obliquely incident on a dielectric multilayer film. However, the response of metal materials to light differs from that of dielectrics. The reflection of metals is caused by the induction current of electrons in the metal to the incident ray's electric field. According to the free electron model (Drude model) of metals, the electrical conductivity of metals is isotropic, resulting in the reflectance value of metals to visible light being minimally dependent on the angle of incidence. Therefore, in the present disclosure, the setting of the metallic layer can reduce the difference in transmittance between s-polarized light and p-polarized light components, improving the consistency of the transmittance of s-polarized light and p-polarized light components for oblique incident ray, thereby effectively improving the ellipticity of the folded optical path lens, making its ellipticity closer to 1.

The second surface of the first lens can be either a flat surface or a concave surface, and those skilled in the art can flexibly choose the specific structure of the first lens based on actual needs.

According to embodiments of the invention, with reference to FIG. 1, the folded optical path lens further includes: a quarter-wave plate (i.e., a quarter-wavelength phase retardation film) 20, which is disposed on a side of the first lens 11 away from the convex surface; a reflective polarizing film 30, which is disposed on a side of the quarter-wave plate 20 away from the first lens 11. In a folded optical path (Pancake) lens, the function of the quarter-wave plate is to change the polarization state of the light, converting circularly polarized light into linearly polarized light and vice versa; the function of the reflective polarizing film is to transmit polarized light in one direction (e.g., s-polarized light) and reflect polarized light in the other direction (e.g., p-polarized light).

Combining a specific structure of the folded optical path lens, with reference to FIG. 2, the specific principle of the folded optical path lens is as follows: a display screen surface cooperates with a quarter-wave plate (a quarter-wavelength phase retardation film) to emit right-handed circularly polarized light 1. After passing through the beam-splitting film, the polarization state of the ray 2 remains unchanged, still being right-handed circularly polarized light. After passing through the quarter-wavelength phase retardation film in FIG. 2, the right-handed circularly polarized light becomes linearly polarized light 3 polarized in the z-axis direction as shown. In a folded optical path (Pancake) lens, the primary determinant of ellipticity is the quarter-wavelength phase retardation film (QWP). An ideal QWP needs to delay the linearly polarized light by exactly a quarter wavelength when the linearly polarized light is incident at a 45° angle to its optical axis to form circularly polarized light with an ellipticity of 1. If the delay is insufficient or exceeds a quarter wavelength, it will form elliptically polarized light with an ellipticity less than 1. However, the inventors found that the beam-splitting film also affects the ellipticity of the folded optical path lens. If a beam-splitting film transmits a ray with an incidence angle of 0°, the transmittance of s-polarized and p-polarized light components of the incident ray is each 50%. However, when the incidence angle is larger, the difference in transmittance between s-polarized and p-polarized light components increases significantly, which will severely affect the ellipticity of the folded optical path lens. Based on this, the inventors added at least one metallic layer to the beam-splitting film, which significantly reduces the difference in transmittance between s-polarized and p-polarized light components of the incident ray, thereby improving the ellipticity of the folded optical path lens, making its value closer to 1, thus effectively reducing ghosting and stray light in the folded optical path lens.

According to some embodiments of the present disclosure, when a ray is incident on the folded optical path lens at an angle of less than or equal to 40°, the difference in transmittance between the s-polarized light and p-polarized light of the incident ray on the folded optical path lens is less than or equal to 20%, or further, the difference is less than or equal to 10%. The difference in reflectance value between the s-polarized light and p-polarized light of the incident ray on the folded optical path lens is less than or equal to 20%, or further, the difference is less than or equal to 10%. It can be seen that even if the ray is incident on the folded optical path lens at a larger incident angle, the folded optical path lens can still achieve a higher consistency in the transmittance and reflectance of the s-polarized light and p-polarized light components of the oblique incident ray (the smaller the difference in transmittance between the s-polarized light and p-polarized light of the incident ray on the folded optical path lens, and the smaller the difference in reflectance value, the higher the consistency), ensuring better ellipticity of the folded optical path lens, effectively reducing ghosting and stray light of the folded optical path lens. Furthermore, according to some embodiments of the present disclosure, when the ray is incident on the folded optical path lens at an angle of less than or equal to 50°, the difference in transmittance value between the s-polarized light and p-polarized light of the incident ray on the folded optical path lens is less than or equal to 20%, and the difference in reflectance value is less than or equal to 20%.

Furthermore, the difference in transmittance value between the s-polarized light and p-polarized light of the incident ray on the folded optical path lens is less than or equal to 10%, and the difference in reflectance value is less than or equal to 10%. It can be seen that even if the ray is incident on the folded optical path lens at a larger incident angle (such as 40°, 42°, 45°, 47°, 50°, etc.), the folded optical path lens can still achieve a higher consistency in the transmittance value and reflectance value of the s-polarized light and p-polarized light components of the oblique incident ray, ensuring better ellipticity of the folded optical path lens and effectively reducing ghosting and stray light.

According to embodiments of the present disclosure, the difference between the reflectance value and transmittance value of the beam-splitting film is less than or equal to 20%. For example, the difference between the reflectance (R) and transmittance (T) of the beam-splitting film is 20%, 18%, 15%, 12%, 8%, 6%, 4%, 2%, 0%, etc. In some specific embodiments, the reflectance and transmittance of the beam-splitting film are specifically R40%/T60%, R60%/T40%, or R50%/T50%. Due to the certain light-absorbing property of the metallic layer, the reflectance and transmittance of the beam-splitting film are specifically R48%/T48%, R45%/T45%, R40%/T50%, or R50%/T40%, etc.

According to embodiments of the present disclosure, the material of the metallic layer includes at least one of silver, aluminum, chromium, titanium, platinum, silver-gold alloy, silver-indium alloy, and indium-tin alloy. Thus, the metallic layer of the above materials can effectively reduce the difference in transmittance between the s-polarized light and p-polarized light of the incident ray on the folded optical path lens, thereby improving the ellipticity of the folded optical path lens and making its value closer to 1, thus effectively reducing ghosting and stray light of the folded optical path lens. The material of the non-metallic transparent coating includes at least one of titanium dioxide, silicon dioxide, niobium pentoxide, aluminum trioxide, tantalum dioxide, hafnium dioxide, magnesium fluoride, zinc sulfide, zinc selenide, zirconium dioxide, lanthanum oxide, praseodymium oxide, cerium oxide, and multicomponent metal oxides (such as Merck's H4 product (lanthanum titanate)). Thus, the transparency and light transmittance of the non-metallic transparent coating of the above materials are relatively high. In some embodiments of the present disclosure, the specific number of layers, the specific materials of each layer, and the specific thickness of a single layer of the non-metallic transparent coating and the metallic layer can be flexibly adjusted using the above materials. Optimally, the transmittance and reflectance of the s-polarized light and p-polarized light components of the incident ray are completely consistent when the incident angle of the folded optical path lens is 0°, for example, each being 50%, without causing excessive absorption of visible light by the beam-splitting film. According to some embodiments of the present disclosure, the absorption rate of the beam-splitting film for visible light is less than or equal to 25%, such as 25%, 23%, 20%, 18%, 15%, 12%, 10%, 9%, 8%, 7%, 6%, 5%, 3%, 1%, etc. Therefore, the better transmittance and reflectance of the folded optical path lens can be ensured. Optimally, in some embodiments, the absorption rate of the beam-splitting film for visible light is less than or equal to 10%.

According to embodiments of the present disclosure, the thickness of the metallic layer is 1 to 50 nanometers (such as 1 nm, 5 nm, 8 nm, 10 nm, 15 nm, 20 nm, 25 nm, 30 nm, 35 nm, 40 nm, 45 nm, 50 nm), and the thickness of the non-metallic transparent coating is 1 to 250 nanometers (such as 1 nm, 10 nm, 50 nm, 80 nm, 100 nm, 120 nm, 150 nm, 180 nm, 200 nm, 230 nm, 250 nm). Thus, the above thicknesses of the metallic layer and non-metallic transparent coating can effectively help reduce the difference in transmittance between the s-polarized light and p-polarized light of the incident ray on the folded optical path lens, thereby improving the ellipticity of the folded optical path lens and making its value closer to 1, thus effectively reducing ghosting and stray light of the folded optical path lens.

According to embodiments of the present disclosure, the outermost optical coating layer of the beam-splitting film is a non-metallic transparent coating, with the metallic layer located in the middle position of the beam-splitting film. In this way, this arrangement can avoid oxidation of the metallic layer. If the metallic layer is on the surface, it is difficult to achieve full spectrum spectroscopic consistency, that is, the beam-splitting film can be better designed to make the reflectance and transmittance as close to the design value (such as 50%) as possible in the full visible band.

According to embodiments of the present disclosure, the metallic layer can be formed by physical vapor deposition methods such as thermal evaporation, electron beam evaporation, ion-assisted evaporation, magnetron sputtering, as well as by chemical vapor deposition, atomic layer deposition, or electrochemical deposition methods. The non-metallic transparent coating can be formed by physical vapor deposition methods such as thermal evaporation, electron beam evaporation, ion-assisted evaporation, magnetron sputtering, as well as by chemical vapor deposition, atomic layer deposition, or electrochemical deposition methods.

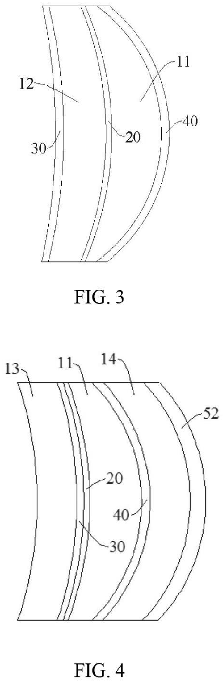

In some embodiments of the present disclosure, referring to FIG. 3, the folded optical path lens further includes: a second lens 12, which has a third surface and a fourth surface, with the third surface of the second lens adjacent to the second surface, or the second lens disposed on a side of the first lens 11 away from the convex surface, a quarter-wave plate 20 disposed between the first lens 11 and the second lens 12, and a reflective polarizing film 30 disposed on a side of the second lens 12 away from the first lens 11. Furthermore, in some embodiments, based on FIG. 3, the folded optical path lens may further include a linear polarizing film, hard coating, or anti-reflective coating located between the reflective polarizing film 30 and the second lens 12. Additionally, the quarter-wave plate 20 is disposed on the convex surface of the second lens 12, and bonding can be achieved through optical adhesive between the quarter-wave plate 20 and the first lens 11.

In other embodiments of the present disclosure, referring to FIG. 4, the folded optical path lens further includes: a third lens 13, which is disposed on a side of the first lens 11 close to the second surface, meaning the third lens 13 is disposed on the side of the first lens 11 away from the convex surface, a quarter-wave plate 20 disposed on the side of the first lens 11 near the third lens 13, a reflective polarizing film 30 set on the side of the quarter-wave plate 20 close to the third lens 13, a fourth lens 14 disposed on the side of the beam-splitting film 40 away from the first surface of the first lens 11, an anti-reflection coating 52 disposed on the surface of the fourth lens 14 away from the first lens 11. Furthermore, in some embodiments, based on FIG. 4, the folded optical path lens may further include a linear polarizing film, hard coating, or anti-reflective coating located on the surface of the third lens 13 away from the first lens 11. Additionally, the beam-splitting film 40 is disposed on the convex surface of the first lens 11, and bonding can be achieved through optical adhesive between the first lens 11 and the fourth lens 14.

According to some embodiments of the present disclosure, the materials of the first lens, second lens, third lens, and fourth lens may respectively be low birefringence PMMA (polymethyl methacrylate), COC (cyclic olefin copolymer), or glass.

In another aspect of the present disclosure, an optical imaging system is provided. According to some embodiments of the present disclosure, the optical imaging system includes a display screen and the folded optical path lens described above. The folded optical path lens is located on an emitting side of the display screen, and the ray emitted by the display screen passes through the folded optical path lens to form an image. Therefore, the optical imaging system has reduced ghosting and stray light, thereby contributing to improved image quality of the optical imaging system. Those skilled in the art would understand that the optical imaging system has all the features and advantages of the folded optical path lens described above, and further details are omitted here. In this system, the first surface (convex surface) of the first lens faces the display screen, and the second surface faces away from the display screen.

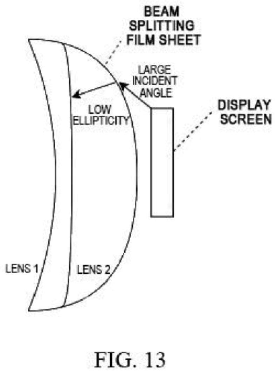

According to some embodiments of the present disclosure, the display screen is a micro OLED display screen. As described above, in the present disclosure, even when a ray enters the folded optical path lens at a large angle of incidence (such as 40°, 42°, 45°, 47°, 50°, etc.), the folded optical path lens can still maintain high consistency in transmittance and reflectance of s-polarized light and p-polarized light components for obliquely incident ray, ensuring better ellipticity of the folded optical path lens and effectively reducing ghosting and stray light of the folded optical path lens. Therefore, in the optical imaging system of the present disclosure, even if a small-sized micro OLED display screen is selected (the smaller the size of the display screen, the more likely large angles of incidence occur at the edge of the folded optical path lens, as shown in FIG. 13), the folded optical path lens can still maintain high consistency in transmittance and reflectance of s-polarized light and p-polarized light components for obliquely incident ray, effectively reducing ghosting and stray light of the Pancake lens. This means that the Pancake lens of the present disclosure is suitable for use with small-sized, high-resolution screens such as micro OLED screens, thereby helping virtual reality devices (such as VR glasses) to achieve a higher level of display quality compared to the current state of the art.

Of course, those skilled in the art will understand that the display screen in the optical imaging system may also be suitable for relatively large-sized LCD display screens. The closer the size of the display screen is to the size of the folded optical path lens, the less likely it is to have large angles of incidence.

In another aspect of the present disclosure, a head-mounted display device is provided. According to some embodiments of the present disclosure, the head-mounted display device includes the optical imaging system described above. Therefore, the head-mounted display device has high image quality.

According to some embodiments of the present disclosure, the head-mounted display device is a virtual reality VR headset.

### Embodiments

### Embodiment 1

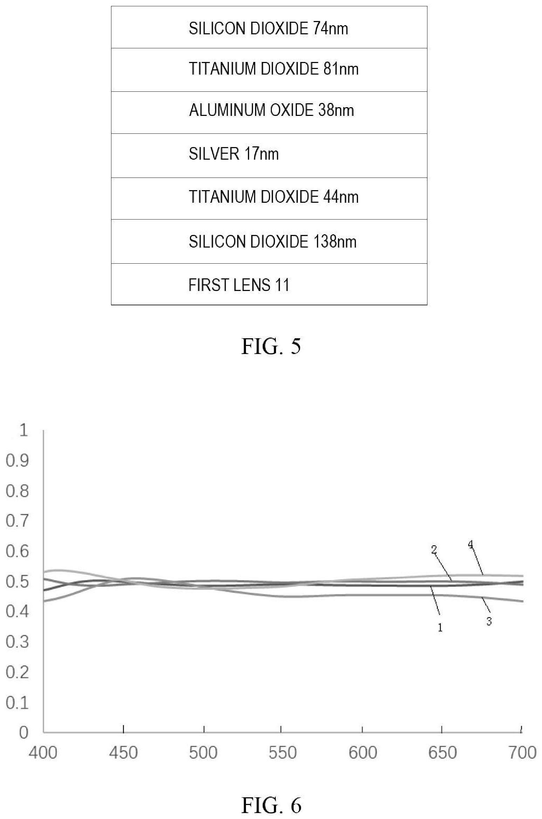

The structure of the folded optical path lens is shown in FIG. 3, where the first lens and the second lens are COC lenses. The structure of the beam-splitting film and the thickness of each optical coating layer can be referred to in FIG. 5.

Light rays at incidence angles of 0° and 40° enters the folded optical path lens in embodiment 1. The reflectance and transmittance through the folded optical path lens can be referenced from FIG. 6 (where the horizontal coordinate represents wavelength/nm and the vertical coordinate represents reflectance R and transmittance T). The reflectance value curve of ray entering the folded optical path lens at an incident angle of 0° is curve 1, the transmittance curve of ray entering the folded optical path lens at an incident angle of 0° is curve 2, the transmittance curve of s-polarized light entering the folded optical path lens at an incident angle of 40° is curve 3, and the transmittance curve of p-polarized light entering the folded optical path lens at an incident angle of 40° is curve 4. As can be seen from FIG. 6, when the ray at an incident angle of 40° enters the folded optical path lens, the difference between the transmittance of s-polarized light and p-polarized light is relatively small, within 15%.

### Comparison Example 1

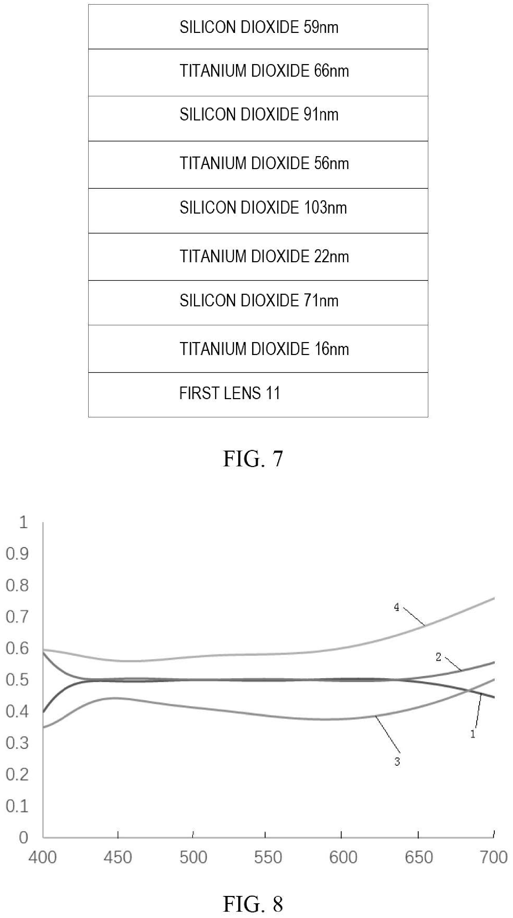

The structure of the folded optical path lens is depicted in FIG. 3, where the first lens and the second lens are COC lenses. The structure of the beam-splitting film and the thickness of each optical coating layer can be referred to in FIG. 7.

The rays at incident angles of 0° and 40° enter the folded optical path lens in Comparison Example 1, respectively. The reflectance value and transmittance through the folded optical path lens can refer to FIG. 8 (the horizontal coordinate is wavelength/nm, and the vertical coordinate is reflectance R and transmittance T). The reflectance curve of ray entering the folded optical path lens at an incident angle of 0° is curve 1, the transmittance curve of ray entering the folded optical path lens at an incident angle of 0° is curve 2, the transmittance curve of s-polarized light entering the folded optical path lens at an incident angle of 40° is curve 3, and the transmittance curve of p-polarized light entering the folded optical path lens at an incident angle of 40° is curve 4. As can be seen from FIG. 8, when the ray at an incident angle of 40° enters the folded optical path lens, the difference between the transmittance of s-polarized light and p-polarized light is relatively large, greater than 20%.

### Embodiment 2

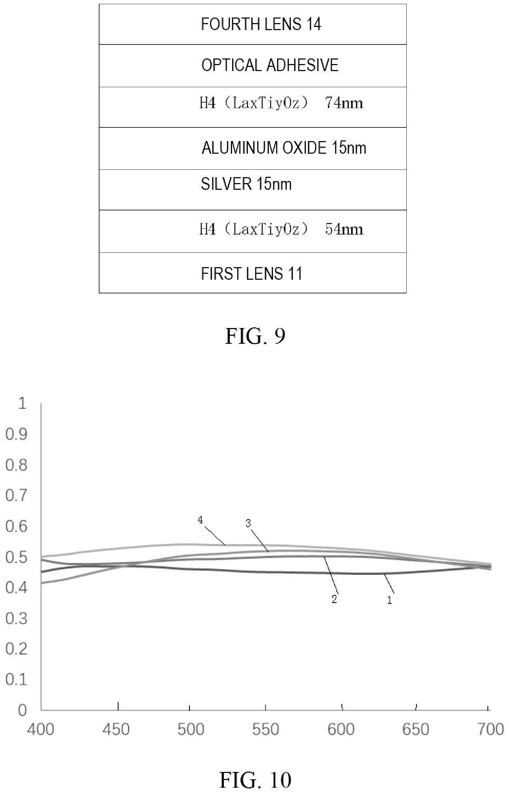

The structure of the folded optical path lens is illustrated in FIG. 4, where the first lens, the third lens, and the fourth lens are COC lenses. The structure of the beam-splitting and the thickness of each optical coating layer can be referred to in FIG. 9.

The rays at incident angles of 0° and 40° enter the folded optical path lens in embodiment 2, respectively. The reflectance and transmittance of the folded optical path lens can refer to FIG. 10 (the horizontal coordinate is wavelength/nm, and the vertical coordinate is reflectance R and transmittance T). The reflectance curve of ray entering the folded optical path lens at an incident angle of 0° is curve 1, the transmittance curve of ray entering the folded optical path lens at an incident angle of 0° is curve 2, the transmittance curve of s-polarized light entering the folded optical path lens at an incident angle of 40° is curve 3, and the transmittance curve of p-polarized light entering the folded optical path lens at an incident angle of 40° is curve 4. As can be seen from FIG. 10, when the ray at an incident angle of 40° enters the folded optical path lens, the difference between the transmittance of s-polarized light and p-polarized light is relatively small, within 6%.

### Comparison Example 2

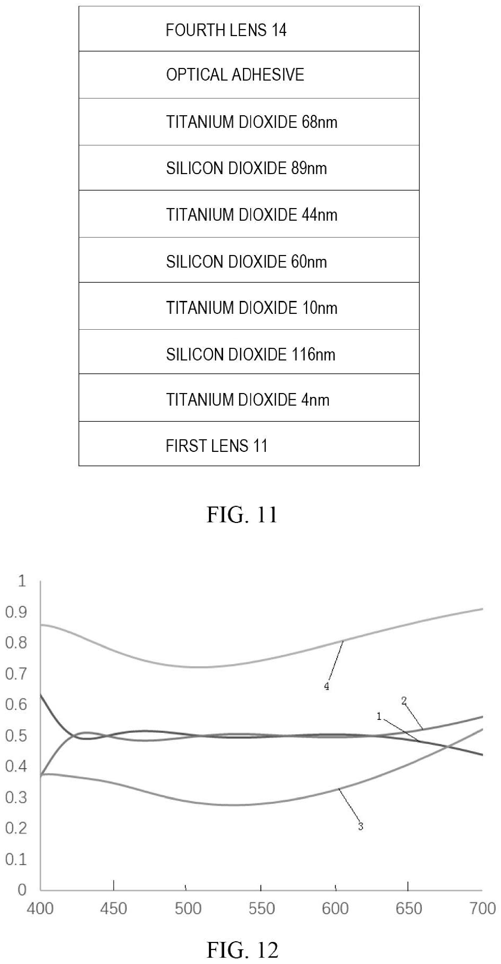

The structure of the folded optical path lens is shown in FIG. 4, where the first lens, the third lens, and the fourth lens are COC lenses. The structure of the beam-splitting film and the thickness of each optical coating layer can be referred to in FIG. 11.

The rays at incident angles of 0° and 40° enter the folded optical path lens in Comparison Example 2, respectively. The reflectance and transmittance of the folded optical path lens can refer to FIG. 12 (the horizontal coordinate is wavelength/nm, and the vertical coordinate is reflectance R and transmittance T). The reflectance curve of ray entering the folded optical path lens at an incident angle of 0° is curve 1, the transmittance curve of ray entering the folded optical path lens at an incident angle of 0° is curve 2, the transmittance curve of s-polarized light entering the folded optical path lens at an incident angle of 40° is curve 3, and the transmittance curve of p-polarized light entering the folded optical path lens at an incident angle of 40° is curve 4. As can be seen from FIG. 12, when the ray at an incident angle of 40° enters the folded optical path lens, the difference between the transmittance of s-polarized light and p-polarized light is relatively large, greater than 30%.

The terms "first" and "second" are used for descriptive purposes only and are not to be understood as indicating or implying relative importance or implicitly specifying the number of technical features indicated. Therefore, features defined as "first" and "second" may explicitly or implicitly include one or more of these features. In the description of this application, "a plurality of" means two or more, unless otherwise specifically defined.

In the description of this specification, references to terms such as "an embodiment," "some embodiments," "an example," "a specific example," or "some examples" mean that a specific feature, structure, material, or characteristic described in connection with the embodiment or example is included in at least one embodiment or example of the present disclosure. The schematic expressions of the aforementioned terms do not necessarily refer to the same embodiment or example. Furthermore, the described specific features, structures, materials, or characteristics can be combined in suitable ways in any one or more embodiments or examples. In addition, without conflicting with each other, those skilled in the art can combine and integrate the different embodiments or examples and features of different embodiments or examples described in this specification.

Although the embodiments of the present disclosure have been shown and described above, it is understood that the above embodiments are illustrative and are not to be construed as limiting the present disclosure. Those skilled in the art can make variations, modifications, substitutions, and alterations to the above embodiments within the scope of the present invention.

## Claims

1. A folded optical path lens, **characterized by** comprising:
a first lens, the first lens having a first surface and a second surface disposed oppositely, the first surface being a convex surface; and
a beam-splitting film, the beam-splitting film being disposed on the first surface, wherein a difference between a reflectance value and a transmittance value of the beam-splitting film is less than or equal to 20%, and the beam-splitting film comprises a plurality of optical coating layers stacked together, wherein the plurality of optical coating layers comprise at least one non-metallic transparent coating and at least one metallic layer.

2. The folded optical path lens of claim 1, **characterized by** further comprising:
a quarter-wave plate, the quarter-wave plate being disposed on a side of the first lens away from the convex surface; and
a reflective polarizing film, the reflective polarizing film being disposed on a side of the quarter-wave plate away from the first lens.

3. The folded optical path lens of claim 1 or 2, **characterized in that** when a ray is incident on the folded optical path lens at an angle less than or equal to 40°, a difference between transmittance values of s-polarized light and p-polarized light of the incident ray of the folded optical path lens is less than or equal to 20%, and a difference between reflectance values of the s-polarized light and the p-polarized light of the incident ray of the folded optical path lens is less than or equal to 20%.

4. The folded optical path lens of claim 3, **characterized in that** the difference between the transmittance values of the s-polarized light and the p-polarized light of the incident ray of the folded optical path lens is less than or equal to 10%, and the difference between the reflectance values of the s-polarized light and the p-polarized light of the incident ray of the folded optical path lens is less than or equal to 10%.

5. The folded optical path lens of claim 3, **characterized in that** when a ray is incident on the folded optical path lens at an angle less than or equal to 50°, a difference between transmittance values of s-polarized light and p-polarized light of the incident ray of the folded optical path lens is less than or equal to 20%, and a difference between reflectance values of the s-polarized light and the p-polarized light of the incident ray of the folded optical path lens is less than or equal to 20%.

6. The folded optical path lens of claim 1 or 2, **characterized in that** a material of the metallic layer comprises at least one of silver, aluminum, chromium, titanium, platinum, silver-gold alloy, silver-indium alloy, and indium-tin alloy;
a material of the non-metallic transparent coating comprises at least one of titanium dioxide, silicon dioxide, niobium pentoxide, aluminum oxide, tantalum dioxide, hafnium dioxide, magnesium fluoride, zinc sulfide, zinc selenide, zirconium dioxide, lanthanum oxide, praseodymium oxide, and cerium oxide.

7. The folded optical path lens of claim 6, **characterized in that** a thickness of the metallic layer is 1~50 nanometers, and a thickness of the non-metallic transparent coating is 1~250 nanometers.

8. The folded optical path lens of claim 1 or 2, **characterized in that** an outermost optical coating layer of the beam-splitting film is the non-metallic transparent coating.

9. The folded optical path lens of claim 1 or 2, **characterized in that** an absorption rate of the beam-splitting film for visible light is less than or equal to 25%.

10. The folded optical path lens of claim 2, **characterized by** further comprising:
a second lens, the second lens having a third surface and a fourth surface, the third surface being disposed close to the second surface, the quarter-wave plate being disposed between the first lens and the second lens, and the reflective polarizing film being disposed on a side of the second lens away from the first lens.

11. The folded optical path lens of claim 2, **characterized by** further comprising:
a third lens, the third lens being disposed on a side of the first lens close to the second surface, the quarter-wave plate being disposed on a side of the first lens close to the third lens, and the reflective polarizing film being disposed on a side of the quarter-wave plate close to the third lens;
a fourth lens, the fourth lens being disposed on a side of the beam-splitting film away from the first surface of the first lens;
an anti-reflection coating, the anti-reflection coating being disposed on a surface of the fourth lens away from the first lens.

12. An optical imaging system, **characterized by** comprising a display screen and a folded optical path lens of any one of claims 1-11, the folded optical path lens being located on a light-emitting side of the display screen, and a ray emitted by the display screen forming an image after passing through the folded optical path lens.

13. The optical imaging system of claim 12, **characterized in that** the display screen is a micro OLED display screen.

14. A head-mounted display device, **characterized by** comprising an optical imaging system of claim 12 or 13.
